(19) Europäisches Patentamt
European Patent Office
Office européen des brevets

(11) **EP 1 485 428 B1**

(12) **EUROPÄISCHE PATENTSCHRIFT**

(45) Veröffentlichungstag und Bekanntmachung des Hinweises auf die Patenterteilung:
**07.06.2006 Patentblatt 2006/23**

(21) Anmeldenummer: **03724835.8**

(22) Anmeldetag: **17.03.2003**

(51) Int Cl.:
**C08J 5/24** (2006.01)     **C08J 5/04** (2006.01)

(86) Internationale Anmeldenummer:
**PCT/DE2003/000849**

(87) Internationale Veröffentlichungsnummer:
**WO 2003/078510 (25.09.2003 Gazette 2003/39)**

(54) **VERFAHREN ZUR ERZEUGUNG VON HOCHBELASTBAREN FADENPREPREGS**

METHOD FOR PRODUCING FIBER PREPREGS THAT CAN BE HIGHLY STRESSED

PROCEDE DE FABRICATION DE PREIMPREGNES FILAIRES TRES RESISTANT

(84) Benannte Vertragsstaaten:
**AT BE BG CH CY CZ DE DK EE ES FI FR GB GR HU IE IT LI LU MC NL PT RO SE SI SK TR**

(30) Priorität: **15.03.2002 DE 10211668**

(43) Veröffentlichungstag der Anmeldung:
**15.12.2004 Patentblatt 2004/51**

(73) Patentinhaber: **P-D Tec Fil GmbH Technische Filamente**
**04758 Oschatz (DE)**

(72) Erfinder:
• **RECTOR, Horst-Dieter**
**52134 Herzogenrath (DE)**
• **FRENKEN, Johannes**
**52080 Aachen (DE)**

(74) Vertreter: **König, Werner**
**Patentanwälte König & Kollegen**
**Kackertstrasse 10**
**52072 Aachen (DE)**

(56) Entgegenhaltungen:
**EP-A- 0 393 536      EP-A- 0 950 504**
**EP-A- 1 321 194      WO-A-01/70855**
**US-A- 5 165 993**

**Beschreibung**

Die Erfindung betrifft ein Verfahren zur Erzeugung von hochbelastbaren Fadenprepregs aus Glas- oder Aramid- oder Kohlefasern bei einer Fadenstärke von 110 bis 4080 dtex, bei dem die Fasern in einer PTFE-Dispersion getränkt werden, dann durch eine Düse hindurchgeführt und dabei druckimprägniert werden, wobei die zwischen den einzelnen Filamenten der Fasern noch befindliche Luft ausgepresst und die Einzelfilamente vollständig mit PTFE ummantelt und dann getrocknet werden.

Aufgabe der vorliegenden Erfindung ist es, bei einem Verfahren der eingangs erwähnten Art (PCT/DE 00/00833) eine weitere Steigerung der Festigkeit der Fäden sowie der daraus anschließend gewonnenen textilen Elemente zu erzielen.

Diese Aufgabe wird erfindungsgemäß dadurch gelöst, dass bei Verwendung einer Düse ohne zylindrischen Austrittsansatz der engste Querschnitt der Düse um 15 bis 170 % größer ist als die Summe der Querschnitte der Einzelfilamente des Fadens und dass das die Einzelfilamente umhüllende PTFE vor dem Aufwickeln des Fadens ausgesintert wird.

Bei dem erfindungsgemäß vorgesehenen geringen Verhältnis zwischen Düsenquerschnitt einerseits und der Summe der Querschnitte der verwendeten Filamente kommt es zu Fäden, bei denen die einzelnen Filamente sowie die dazwischen liegenden Räume zuverlässig mit PTFE umschlossen bzw. ausgefüllt und Luftblasen ausgepresst sind. Es bleibt demnach kein Raum für ein unerwünschtes Eindringen von Feuchtigkeit in Kapillarräume des Fadens.

Erfindungsgemäß kann mit dem Austrittsende der Düse ein Austrittsansatz verbunden sein, der sich an das Austrittsende der Düse geradlinig anschließt und einen Führungskanal bildet, dessen Profil demjenigen am Austrittsende der Düse entspricht.

Hier macht sich die Erfindung den an sich bekannten technischen Effekt zu Nutze, dass durch die Anfügung eines Austrittsansatzes an das Austrittsende einer Düse die Düsenwirkung insgesamt erhöht werden kann, dass also durch Anfügung eines solchen Austrittsansatzes an eine Düse die Wirkung einer Düse geringeren Austrittsquerschnitts erreicht werden kann. Dieser Effekt ist dann besonders bedeutsam, wenn bei Düsen sehr geringe Austrittsquerschnitte gefordert werden, die einen hohen Fertigungsaufwand erfordern und hochgradig verschleißbehaftet sind. Bei solchen Düsen ist zudem zu beachten, dass auch kleine Fertigungstoleranzen eine hohe Auswirkung auf das durch die Düsen geführte Material haben. Die Verwendung eines Austrittsansatzes führt demgegenüber zu Vereinfachungen bei der Herstellung und reduziert den Verschleiß. Die Fertigungstoleranzen werden kleiner und haben geringere Auswirkungen.

Die Erfindung sieht ferner vor, dass die Länge des Austrittsansatzes näherungsweise nach dem Gesetz von Hagen-Poiseuille bestimmt wird, wonach gilt:

$$V = \frac{\Pi \cdot \Delta p \cdot t \cdot D^4}{128 \cdot \eta \cdot L}$$

entsprechend bei annähernd konstanten übrigen Faktoren $V \sim \dfrac{D^4}{L}$.

In der Formel bedeutet

V : durchströmendes Volumen
$\Delta p$: Druckdifferenz zwischen Ein- und Auslauf der Düse
D : hydraulischer Durchmesser der Düse
L : Länge des Austrittsansatzes
$\eta$ : Viskosität der Flüssigkeit
t : Zeit

Die genannte Formel gilt näherungsweise auch für Tränkdüsen, wobei zu beachten ist, dass nicht nur Flüssigkeit, sondern auch Filamente durch die Düse strömen. Die bestimmenden geometrischen Faktoren in dieser Formel sind D = hydraulischer Durchmesser und L = Länge. Wenn die übrigen Faktoren konstant bleiben, dann ist das durchströmende Volumen in etwa proportional zum Verhältnis

$$V \sim \frac{D^4}{L}.$$

Das bedeutet, dass theoretisch unter sonst gleichen Bedingungen durch eine Düse mit dem doppelten Durchmesser, jedoch mit 16-facher Länge, die gleiche Menge Flüssigkeit hindurchströmen kann. Dies bedeutet beispielsweise,

$$\frac{D^4}{L} = \frac{1^4}{10} = \frac{2^4}{160} = 0,1$$

Dies bedeutet für die Praxis, dass es besonders bei sehr kleinen Düsen für feine Fäden vorteilhaft sein kann, sie mit einem Austrittsansatz zu versehen, also mit Düsen größeren Durchmessers arbeiten zu können, die dann unter anderem auch das Einlegen von Fäden in die Düsen erleichtern.

Das Verfahren kann so geführt werden, dass die Düse sowie der Führungskanal des Austrittsansatzes einerseits durch eine plattenförmige Auflage abgedeckt und andererseits durch ein rundes oder eckiges Profil gebildet sind, so dass zwischen plattenförmiger Auflage und dem runden oder eckigen Profil ein Führungskanal gebildet wird. Die Auflage kann zum Einlegen eines Fadens abgenommen werden. Dadurch wird die Herstellung bei feineren Fadenstärken erheblich vereinfacht wenn nicht überhaupt erst praktisch ausführbar.

Der aus der Düse - mit oder ohne Austrittsansatz - austretende Faden, dessen Einzelfilamente mit PTFE umhüllt sind und dessen Zwischenräume geschlossen sind, wird vor dem Aufwickeln ausgesintert, so dass der Faden bei seiner anschließenden Weiterverwendung hohe Festigkeitseigenschaften, insbesondere eine hervorragende Abriebfestigkeit, ausweist, so dass aufgrund der vollständigen Umhüllung der Einzelfilamente ein Aufeinanderliegen solcher Fäden in einem Gewebe nicht zu Zerstörungen führt.

Es hat sich als zweckmäßig gezeigt, dass erfindungsgemäß bei Verwendung einer Düse ohne zylindrischen Austrittsansatz der engste Querschnitt der Düse nur um 50 bis 100% größer ist als die Summe der Querschnitte der durch die Düse hindurchzuführenden Einzelfilamente des Fadens.

Weiter wurde gefunden, dass erfindungsgemäß bei Verwendung einer Düse ohne zylindrischen Austrittsansatz und einer Konzentration der Dispersion beim Tränken von 35 bis 45 Gew.-% der Querschnitt der Düse um 50 bis 95 % größer sein sollte als die Summe der Querschnitte der Einzelfilamente des Fadens. Arbeitet man mit einer Konzentration der Dispersion zwischen 55 und 65 Gew.-% so empfiehlt die Erfindung den Querschnitt der Düse um 20 bis 40% größer als die Summe der Querschnitte der Einzelfilamente des Fadens zu bemessen. Arbeitet man mit einer Konzentration der Dispersion beim Tränken von 25 bis 35 Gew.-% so wird erfindungsgemäß ein Querschnitt der Düse empfohlen, der 90 bis 170 % größer ist als die Summe der Querschnitte der Einzelfilamente des Fadens.

Nachfolgend werden Ausführungsformen des erfindungsgemäßen Verfahrens beschrieben. Es zeigt:

Fig. 1 eine schematische Schnittansicht einer bei dem erfindungsgemäßen Verfahren verwendbaren Düse,

Fig. 2 eine schematische Schnittansicht einer bei dem erfindungsgemäßen Verfahren verwendbaren Düse mit Austrittsansatz und

Fig. 3 eine Schnittansicht quer zur Transportrichtung durch mehrere Profile für Düse und Austrittsansatz.

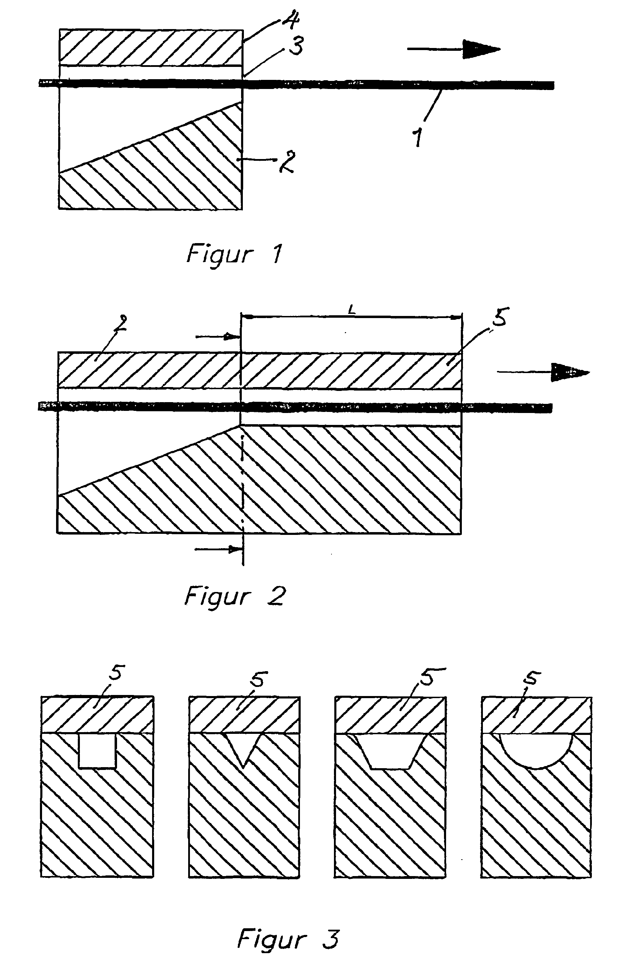

In Figur 1 markiert der Pfeil einen nach rechts laufenden Faden 1 einer Düse 2, die sich nach rechts zu ihrem Austrittsende 3 hin verjüngt. Die Düse ist auf ihrer Oberseite 4 plattenartig abgedeckt. Die Abdeckung kann zum Einlegen des Fadens abgenommen werden.

Figur 2 weicht von derjenigen nach Figur 1 allein dadurch ab, dass an die Düse 1 ein Austrittsansatz 5 angefügt ist, der sich geradlinig an das Austrittsende der Düse 2 anschließt und hier mit L gekennzeichnet ist. Dieser Austrittsansatz verläuft geradlinig und mit dem gleichen Profil wie das Austrittsende 3 der Düse 2. Düse 2 und Austrittsansatz 5 können einstückig ausgebildet sein oder aus Teilstücken bestehend, die fluchtend unmittelbar aneinander anschließen.

Figur 3 zeigt Schnittansichten nach der Schnittangabe in Figur 2 von vier Düsenquerschnitten. Dabei handelt es sich lediglich um eine Auswahl von vielen denkbaren Profilen.

In der beiliegenden Tabelle sind drei Beispiele zur Durchführung des erfindungsgemä-βen Verfahrens jeweils für Glas-, Aramid- und Kohlefasern aufgeführt, wobei die drei Ausführungsbeispiele sich in der Konzentration der Dispersion beim Tränken und darüber hinaus hinsichtlich des PTFE-Anteils des ausgesinterten Fadens unterscheiden. So ist in allen drei Beispielen mit einem Titer von 110 dtex (Glas 1), 220 dtex (Glas 2), 1.360 dtex (Glas 3), 800 dtex (Kohlefaser) und 110 dtex (Aramid) gearbeitet worden. Entsprechend stimmen die Summen der Filamentquerschnitte in den drei Beispielen für die jeweiligen Werkstoffe überein.

Es hat sich gezeigt, dass die Titer und die Summe der Filamentquerschnitte in starker Abhängigkeit von der jeweiligen Konzentration der Dispersion beim Tränken für die einzelnen Fasermaterialien deutlich abweichende Düsenquerschnitte erfordern.

Unter "Düsenquerschnitt > Summe der Filamentquerschnitte" ist in der Tabelle angegeben, um wie viel Prozent der Düsenquerschnitt jeweils größer ist als die Summe der Filamentquerschnitte. Diese Zahlenkolonnen machen deutlich, dass im Verhältnis zur Summe der Filamentquerschnitte der Düsenquerschnitt umso größer sein muss je geringer die Konzentration der Dispersion beim Tränken der Filamente ist.

Die vier am weitesten rechts liegenden Zahlenkolonnen betreffen das Verhältnis von Düsenquerschnitt zu der Summe der Filamentquerschnitte in Abhängigkeit von der Länge des zylindrischen Austrittsansatzes. Die am weitesten links liegende Kolonne geht von einer Länge des Austrittsansatzes von Null aus, während die dann nach rechts folgenden Kolonnen das entsprechende Verhältnis bei einer Länge des Austrittsansatzes von 6 mm, 31 mm und 55 mm angeben. Aus dieser Gegenüberstellung wird deutlich, dass bei gleich bleibender Summe der Filamentquerschnitte eine Vergrößerung des Verhältnisses zwischen Düsenquerschnitt und Summe der Filamente eintritt. Mit steigender Länge des Austrittsansatzes kann also der Düsenquerschnitt vergrößert werden, also es kann mit einer bei steigendem Querschnitt grundsätzlich weniger verschleißbelasteten Düse gearbeitet werden.

Die Fäden werden nach Passieren der Düse, ob mit oder ohne Austrittsansatz gearbeitet wurde, ausgesintert und in diesem Zustand aufgewickelt.

Die Weiterverwendung erfolgt durch Weben, Wirken, Legen, Klöppeln oder Flechten der so gebildeten Fadenprepregs. Nach einer solchen Verarbeitung kann das dann entstandene textile Gebilde kalandriert werden. Das Fertiggebilde eignet sich in besonderer Weise für Zeltplanen, Transportbahnen oder zum Schutz gegen Hitze und Flammen.

| | | | | | | | | |
|---|---|---|---|---|---|---|---|---|
| Beispiele: | | | | | | | | |
| | | | | | | | | |
| Konzentration der Dispersion | % | 40 | | | | | | |
| PTFE-Anteil des ausgesinterten Fadens | % | 20 | | Verhältnis Düsenquerschnitt zu | | | | |
| | | Summe der | | Düsenquerschnitt > Summe der | Summe der Filamentquerschnitte | | | |
| | Titer | Filamentquerschnitte | Düsenquerschnitt | der Filamentquerschnitte | Länge des zyl. Austrittansatzes | | | |
| | dtex | mm$^2$ | mm$^2$ | % | 0 | 6mm | 31mm | 55mm |
| Glas | 110 | 0.0042 | 0,0081 | 91,5 | 1,915 | 2,160 | 2,405 | 2,650 |
| Glas | 220 | 0,0085 | 0,0162 | 91,5 | 1,915 | 2,160 | 2,405 | 2,650 |
| Glas | 1360 | 0,0523 | 0,1002 | 91,5 | 1,915 | 2,160 | 2,405 | 2,650 |
| Kohlefaser | 800 | 0,0444 | 0,0726 | 63,4 | 1,634 | 1,879 | 2,124 | 2,369 |
| Aramid | 110 | 0,0076 | 0,0115 0,0076 0,0115 | 51,1 | 1,511 | 1,756 | 2,000 | <u>2,245</u> |
| Konzentration der Dispersion | % | 60 | | | | | | |
| PTFE-Anleil des ausgesinterten Fadens | % | 10 | | Verhältnis Düsenquerschnitt zu | | | | |
| | | Summe der | | Düsenquerschnitt > Summe der | Summe der Filamentquerschnitte | | | |
| | Titer | Filamentquerschnitte | Düsenquerschnitt | der Filamentquerschnitte | Länge des zyl. Austrittansatzes | | | |
| | dtex | mm$^2$ | mm$^2$ | % | 0 | 6mm | 31mm | 55mm |
| Glas | 110 | 0,0042 | 0,0081 | 36,6 | 1,366 | 1,611 | 1,856 | 2,101 |
| Glas | 220 | 0,0085 | 0,0116 | 36,6 | 1,366 | 1,611 | 1,856 | 2,101 |
| Glas | 1360 | 0,0523 | 0,0714 | 36,6 | 1,366 | 1,611 | 1,856 | 2,101 |
| Kohlefaser | 800 | 0,0444 | 0,0557 | 25,3 | 1,253 | 1,498 | 1,743 | 1,988 |
| Aramid | 110 | 0,0076 | 0,0091 | 20,4 | 1,204 | 1,449 | 1,694 | 1,939 |
| | | | | | | | | |

Tabelle fortgesetzt

| | | Summe der | | Düsenquerschnitt > Summe der | Summe der Filamentquerschnitte | | | |
|---|---|---|---|---|---|---|---|---|
| | Titer | Filamentquerschnitte | Düsenquerschnitt | der Filamentquerschnitte | Länge des zyl. Austrittansatzes | | | |
| | dtex | mm$^2$ | mm$^2$ | % | 0 | 6mm | 31mm | 55mm |
| Konzentration der Dispersion | % | 30 | | | | | | |
| PTFE-Anteil des ausgesinterten Fadens | % | 30 | | Verhältnis Düsenquerschnitt zu | | | | |
| | | Summe der | | Düsenquerschnitt > Summe der | Summe der Filamentquerschnitte | | | |
| | Titer | Filamentquerschnitte | Düsenquerschnitt | der Filamentquerschnitte | Länge des zyl. Austrittansatzes | | | |
| | dtex | mm$^2$ | mm$^2$ | % | 0 | 6mm | 31mm | 55mm |
| Glas | 110 | 0,0042 | 0,0081 | 166,3 | 2,663 | 2,908 | 3,153 | 3,398 |
| Glas | 220 | 0,0085 | 0,0225 | 166,3 | 2,663 | 2,908 | 3,153 | 3,398 |
| Glas | 1360 | 0,0523 | 0,1393 | 166,3 | 2,663 | 2,908 | 3,153 | 3,398 |
| Kohlefaser | 800 | 0,0444 | 0,0956 | 115,1 | 2,151 | 2,396 | 2,641 | 2,886 |
| Aramid | 110 | 0,0076 | 0,0146 | 92,8 | 1,928 | 2,172 | 2,417 | 2,662 |

**Patentansprüche**

1. Verfahren zur Erzeugung von hochbelastbaren Fadenprepregs aus Glas oder Aramid- oder Kohlefasern bei einer Fadenstärke von 110 bis 4080 dtex, bei dem die Fasern in einer PTFE-Dispersion getränkt werden, dann durch eine Düse hindurchgeführt und dabei druckimprägniert werden, wobei die zwischen den einzelnen Filamenten der Fasern noch befindliche Luft ausgepresst und die Einzelfilamente vollständig mit PTFE ummantelt und dann getrocknet werden,
**dadurch gekennzeichnet,**
**dass** eine Düse verwendet wird, die an ihrem Austrittsende ihren kleinsten Durchmesser hat, der um 15 bis 170 % größer ist als die Summe der Querschnitte der Einzelfilamente des Fadens und
**dass** die Einzelfilamente umhüllende PTFE vor dem Aufwickeln des Fadens ausgesintert wird.

2. Verfahren nach Anspruch 1, **dadurch gekennzeichnet, dass** mit dem Austrittsende der Düse ein Austrittsansatz verbunden ist, der sich an das Austrittsende der Düse geradlinig anschließt und einen Führungskanal bildet, dessen Profil demjenigen am Austrittsende der Düse entspricht.

3. Verfahren nach Anspruch 2, **dadurch gekennzeichnet, dass** die Länge des Austrittsansatzes näherungsweise nach dem Gesetz von Hagen-Poiseuille bestimmt wird, wonach gilt:

$$V = \frac{\Pi \cdot \Delta p \cdot t \cdot D^4}{128 \cdot \eta \cdot L}$$

entsprechend bei annähernd konstanten übrigen Faktoren $V \sim \dfrac{D^4}{L}$.

4. Verfahren nach Anspruch 2 oder 3, **dadurch gekennzeichnet, dass** die Düse sowie der Führungskanal des Austrittsansatzes einerseits durch eine plattenförmige Auflage abgedeckt und andererseits durch ein rundes oder eckiges Profil gebildet sind, so dass zwischen plattenförmiger Auflage und dem runden oder eckigen Profil ein Führungskanal gebildet wird.

5. Verfahren nach Anspruch 1, **dadurch gekennzeichnet, dass** bei Verwendung einer Düse ohne zylindrischen Austrittsansatz der engste Querschnitt der Düse um 50 bis 100 % größer ist als die Summe der Querschnitte der Einzelfilamente des Fadens.

6. Verfahren nach Anspruch 1, **dadurch gekennzeichnet, dass** bei Verwendung einer Düse ohne zylindrischen Austrittsansatz und einer Konzentration der Dispersion beim Tränken von 35 bis 45 Gew.-% der Querschnitt der Düse um 50 bis 95 % größer ist als die Summe der Querschnitte der Einzelfilamente des Fadens.

7. Verfahren nach Anspruch 1, **dadurch gekennzeichnet, dass** bei Verwendung einer Düse ohne zylindrischen Austrittsansatz und einer Konzentration der Dispersion beim Tränken von 55 bis 65 Gew.-% der Querschnitt der Düse um 20 bis 40 % größer ist als die Summe der Querschnitte der Einzelfilamente des Fadens.

8. Verfahren nach Anspruch 1, **dadurch gekennzeichnet, dass** bei Verwendung einer Düse ohne zylindrischen Austrittsansatz und einer Konzentration der Dispersion beim Tränken von 25 bis 35 Gew.-% der Querschnitt der Düse um maximal 90-170 % größer ist als die Summe der Querschnitte der Einzelfilamente des Fadens.

**Claims**

1. A method for producing heavy-duty yarn prepregs of glass fibers or aramide fibers or carbon fibers with a yarn thickness between 110 and 4080 dtex, wherein the fibers are soaked in a PTFE dispersion, subsequently conveyed through a nozzle and simultaneously pressure-impregnated, and wherein the air that is still situated between the individual filaments of the fibers is pressed out and the individual filaments are completely encased with PTFE and then dried,

**characterized in that**

the smallest diameter of the nozzle used lies on its outlet end, wherein said diameter is 15 - 170 % greater than the sum of the cross sections of the individual yarn filaments, and **in that** the PTFE used for encasing the individual filaments is sintered out before the yarn is rolled up.

2. The method according to Claim 1, **characterized in that** an outlet attachment is connected to the outlet end of the nozzle, wherein said outlet attachment forms a linear extension of the nozzle outlet end in the form of a guide channel, the profile of which corresponds to that of the nozzle outlet end.

3. The method according to Claim 2, **characterized in that** the length of the outlet attachment is approximatively determined with the formula of Hagen-Poiseuille, according to which the following applies:

$$V = \frac{\Pi \cdot \Delta p \cdot t \cdot D^4}{128 \cdot \eta \cdot L}$$

and, accordingly, $V \sim \dfrac{D^4}{L}$ if the remaining factors are approximately constant.

4. The method according to Claim 2 or 3, **characterized in that** the nozzle and the guide channel of the outlet attachment are formed by a round or cornered profile that is covered with a plate-shaped cover element such that a guide channel is formed between the plate-shaped cover element and the round or cornered profile.

5. The method according to Claim 1, **characterized in that**, when utilizing a nozzle without a cylindrical outlet attachment, the narrowest cross section of the nozzle is 50-100% greater than the sum of the cross sections of the individual yarn filaments.

6. The method according to Claim 1, **characterized in that**, when utilizing a nozzle without a cylindrical outlet attachment and a 35-45 wt.% concentration of the impregnating dispersion, the cross section of the nozzle is 50 - 95 % greater than the sum of the cross sections of the individual yarn filaments.

7. The method according to Claim 1, **characterized in that**, when utilizing a nozzle without a cylindrical outlet attachment and a 55-65 wt.% concentration of the impregnating dispersion, the cross section of the nozzle is 20 - 40 % greater than the sum of the cross sections of the individual yarn filaments.

8. The method according to Claim 1, **characterized in that**, when utilizing a nozzle without a cylindrical outlet attachment and a 25-35 wt.% concentration of the impregnating dispersion, the cross section of the nozzle is 90 - 170 % greater than the sum of the cross sections of the individual yarn filaments.

**Revendications**

1. Procédé pour la production de fils préimprégnés de verre ou de fibres d'aramide ou de carbone à haute résistance d'une masse linéique de 110 à 4080 dtex, au cours duquel les fibres sont imbibées d'une dispersion de PTFE, passent par une tuyère, où elles sont imprégnées sous pression, ce qui élimine les inclusions d'air se trouvant encore entre les filaments des fibres et enrobe les filaments complètement de PTFE, et sont ensuite séchées,

**caractérisé en ce**

qu'on utilise une tuyère qui a son diamètre le plus petit à sa sortie, celui-ci étant de 15 à 170 % plus grand que la somme des sections des filaments du fil, et

**que** le PTFE enrobant les filaments individuels est fritté avant l'embobinage du fil.

**EP 1 485 428 B1**

**2.** Procédé selon la revendication 1, **caractérisé en ce que** la sortie de la tuyère est suivie d'une rallonge en ligne droite par rapport à la sortie de la tuyère et formant un canal de guidage dont le profil correspond à celui de la sortie de la tuyère.

**3.** Procédé selon la revendication 2, **caractérisé en ce que** la longueur de la rallonge est déterminée par approximation d'après la loi d'Hagen-Poiseuille, selon laquelle vaut :

$$V = \frac{\Pi \cdot \Delta p \cdot t \cdot D^4}{128 \cdot \eta \cdot L}$$

soit, tous les autres facteurs approximativement constants $V \sim \dfrac{D^4}{L}$ .

**4.** Procédé selon la revendication 2 ou 3, **caractérisé en ce que** la tuyère et le canal de guidage de la rallonge, d'une part, sont couverts d'une plaque et, d'autre part sont formés par un profil rond ou angulaire, ce qui forme un canal de guidage entre la dite plaque et le profil rond ou angulaire.

**5.** Procédé selon la revendication 1, **caractérisé en ce que**, dans le cas de l'utilisation d'une tuyère sans rallonge cylindrique, la section transversale la plus petite de la tuyère est de 50 à 100 pour cent plus grand que la somme des sections transversales des filaments du fil.

**6.** Procédé selon la revendication 1, **caractérisé en ce que**, dans le cas d'une tuyère sans rallonge cylindrique et d'une concentration de la dispersion d'imprégnation de 35 à 45 pour cent en poids, la section transversale de la tuyère est de 50 à 95 pour cent plus grande que la somme des sections transversales des filaments du fil.

**7.** Procédé selon la revendication 1, **caractérisé en ce que**, dans le cas de l'utilisation d'une tuyère sans rallonge cylindrique et d'une concentration de la dispersion d'imprégnation de 55 à 65 pour cent en poids, la section transversale de la tuyère est de 20 à 40 pour cent plus grande que la somme des sections transversales des filaments du fil.

**8.** Procédé selon la revendication 1, **caractérisé en ce que**, dans le cas de l'utilisation d'une tuyère sans rallonge cylindrique et d'une concentration de la dispersion d'imprégnation de 25 à 35 pour cent en poids, la section transversale de la tuyère est au maximum 90 - 170 pour cent plus grande que la somme des sections transversales des filaments du fil.

*Figur 1*

*Figur 2*

*Figur 3*